# EUROPEAN PATENT APPLICATION

(11) **EP 4 458 162 A1**
(43) Date of publication of application: **06.11.2024**
(21) Application number: 22915599.9
(22) Date of filing: 28.11.2022
(51) Int. Cl.: A23L 2/60, A23L 2/00, A23L 2/56, C12G 3/04

(54) **BEVERAGE CONTAINING SWEETENER AND GABA**

(30) Priority: 27.12.2021 JP 2021212619
(71) Applicant: Suntory Holdings Limited, Osaka 530-8203 (JP)
(72) Inventor: IIMI, Yuya, Kawasaki-shi, Kanagawa 211-0067 (JP); KAMOGAWA, Shun, Kawasaki-shi, Kanagawa 211-0067 (JP); MIURA, Yasushi, Kawasaki-shi, Kanagawa 211-0067 (JP); KONO, Mika, Kawasaki-shi, Kanagawa 211-0067 (JP)
(74) Representative: Vossius & Partner Patentanwälte Rechtsanwälte mbB
(86) International application number: PCT/JP2022/043664
(87) International publication number: WO 2023/127368

(57) **Abstract**

The present invention addresses the problem of providing a means for enhancing the alcohol taste of a low-alcohol beverage or a non-alcoholic beverage. The present invention uses γ-aminobutyric acid and a specific weight ratio of acesulfame potassium and sucralose.

## Description

### TECHNICAL FIELD

The present invention relates to a low-alcohol beverage or a non-alcohol beverage containing acesulfame potassium, sucralose, and γ-aminobutyric acid (GABA) and a method related thereto.

### BACKGROUND ART

Demand for various non-alcohol beverage is increasing in recent years with a rise in health consciousness of consumers or due to an increase in penalty for drunk driving under the Road Traffic Law. For example, non-alcohol beverages tasting like chuhais and cocktails are called chuhai-taste beverages and non-alcohol cocktails, respectively, or also collectively called alcohol-taste beverages. Non-alcohol beverages have been widely accepted.

For these non-alcohol beverages, the tastes of alcoholic beverages which are the models for the non-alcohol beverages are required. Since the beverages do not contain alcohol, the beverages are however short of flavor derived from alcohol. An invention using acesulfame potassium and sucralose at a specified weight ratio for solving such a problem is known (PTL 1).

It is known that GABA imparts thickness of taste to non-fermented alcohol-taste beverages or contributes to a relaxation effect (PTL 2).

### CITATION LIST

### PATENT LITERATURE

PTL 1: Japanese Patent Laid-Open No. 2019-62920
PTL 2: Japanese Patent Laid-Open No. 2017-184697

### SUMMARY OF INVENTION

### TECHNICAL PROBLEM

The present inventors have found that although techniques shown in PTL 1 can impart flavor typical of liquor, the impartation is not necessarily sufficient.

Accordingly, an object of the present invention is to provide means for increasing a liquor-like taste imparted by sweeteners to low-alcohol beverages or non-alcohol beverages.

### SOLUTION TO PROBLEM

The present inventors have earnestly examined and consequently found that the addition of GABA to a low-alcohol beverage or a non-alcohol beverage in which the weight ratio of acesulfame potassium/sucralose is specified can increase the liquor-like taste.

The present invention relates to, but is not limited to, the following.
1. A beverage having an alcohol content of less than 3 v/v%, containing acesulfame potassium, sucralose, and γ-aminobutyric acid, wherein a weight ratio of acesulfame potassium/sucralose is 1 to 300.
2. The beverage according to 1, wherein a content of γ-aminobutyric acid is 10 ppm or more.
3. The beverage according to 1 or 2, wherein the weight ratio of acesulfame potassium/sucralose is 2 to 72, and the content of γ-aminobutyric acid is 50 to 5000 ppm.
4. The beverage according to any one of 1 to 3, wherein the beverage has an alcohol content of 0.00 v/v%.
5. A method for increasing a liquor-like taste of a beverage having an alcohol content of less than 3 v/v%, including:
   a step of adjusting a weight ratio of acesulfame potassium/sucralose in the beverage to 1 to 300 and
   a step of adding γ-aminobutyric acid to the beverage.
6. The method according to 5, wherein a content of γ-aminobutyric acid in the beverage is adjusted to 10 ppm or more.

### ADVANTAGEOUS EFFECTS OF INVENTION

The beverage of the present invention can increase liquor-like taste. The "liquor-like taste" as used with respect to the present invention means that the sharpness of aftertaste typical of liquor is felt with a preferable flavor that has a sweet taste or thickness, and slight bitterness and is typical of liquor. The "sharpness of aftertaste typical of liquor" means a refreshing and light flavor without remaining unpleasant sweetness.

### DESCRIPTION OF EMBODIMENTS

Hereinafter, a beverage and a method of the present invention will be described.

The "ppm" as used herein means ppm by weight/volume (w/v) unless otherwise specified, and this is synonymous with "mg/L". If a substance is described merely as "alcohol" herein, it means ethanol unless otherwise specified.

### (Acesulfame potassium and sucralose)

The beverage of the present invention contains acesulfame potassium and sucralose at a predetermined weight ratio. Although having a low alcohol content or containing no alcohol, the beverage therefore has a flavor typical of liquor.

Acesulfame potassium and sucralose are incorporated into the beverage of the present invention at a weight ratio of acesulfame potassium to sucralose (acesulfame potassium/sucralose) (hereinafter also referred to as "A/S") of 1 to 300, preferably 1 to 297, more preferably 2 to 72, and more preferably 3 to 50.

The concentrations of acesulfame potassium and sucralose in the beverage can be determined depending on the set value of the sweetness in a target beverage and the range of the above-mentioned weight ratio. For example, the sweetness of common alcoholic beverages such as cocktails and chuhais is equivalent to the sweetness of aqueous solutions containing sucrose at a concentration between about 1 to about 15%. In view of this point, the above-mentioned weight ratio, and the fact that a small amount of sweetener may be added, the concentration of acesulfame potassium in the beverage is 25 mg/L or more, preferably 25 to 750 mg/L, preferably 28 to 710 mg/L, further preferably 29 to 710 mg/L, and the most preferably around 30 to 650 mg/L. The concentration of sucralose is calculated from the concentration of the acesulfame potassium and the above-mentioned weight ratio, and is preferably 1 mg/L or more and further preferably 2 mg/L or more.

The concentrations of sucralose and acesulfame potassium in the beverage of the present invention can be analyzed and quantified under the following conditions.

### <Sucralose>

- Column: Zorbax eclipse plus C18
- Mobile phase: Mixed solution of 5 mM solution of ammonium acetate in water/ 5 mM ammonium acetate in acetonitrile (ACN) solution (the ratio between them is changed from 5/95 to 40/60 over 15 minutes.)
- Flow rate: 0.2 ml/min
- Temperature: 40°C
- Detector: Mass detector (tandem mass spectrometer: MS/MS, ESI (-), m/z: 395 -> 359)
- Injection volume: 1 µL

### <Acesulfame potassium>

- Column: Cadenza CD-C-18
- Mobile phase: ACN/10mM ammonium formate (13/87)
- Flow rate: 1.0 ml/min
- Temperature: 37°C
- Detector: UV detector (210 nm)
- Injection volume: 1 µL

### (GABA)

The beverage of the present invention contains γ-aminobutyric acid (GABA). GABA can increase the liquor-like taste of a low-alcohol beverage or a non-alcohol beverage in combination with the sweeteners.

The content of GABA in the beverage of the present invention is preferably 10 ppm or more, more preferably 10 to 5000 ppm, more preferably 25 to 5000 ppm, more preferably 50 to 5000 ppm, more preferably 60 to 500 ppm, more preferably 70 to 500 ppm, and more preferably 70 to 250 ppm.

In a preferable aspect of the beverage of the present invention, the weight ratio of acesulfame potassium/sucralose is 1 to 300, and the content of GABA is 50 to 5000 ppm. In another preferable aspect of the beverage of the present invention, the weight ratio of acesulfame potassium/sucralose is 2 to 72, and content of GABA is 50 to 5000 ppm. In another preferable aspect of the beverage of the present invention, the weight ratio of acesulfame potassium/sucralose is 3 to 50, and the content of GABA is 50 to 5000 ppm.

The content of GABA may be measured by any known method such as GC-MS or HPLC .

### (Low-alcohol beverage and non-alcohol beverage)

The beverage of the present invention is a low-alcohol beverages or a non-alcohol beverage, in other words, the beverage of the present invention has a low alcohol content or contains no alcohol. The alcohol content of the beverage of the present invention is specifically less than 3 v/v%. The content may be 2.0 v/v% or less, 1.0 v/v% or less, or 0.00 v/v%.

The non-alcohol beverage of the present invention does not exclude a beverage containing alcohol in so minute an amount as to be undetectable. The alcohol content of the non-alcohol beverage of the present invention is preferably 0.00 v/v%. In description for confirmation, "0.00 v/v%" also includes numerical values such as 0.001 v/v% which can be rounded off to be 0.00 v/v%.

Examples of the non-alcohol beverage include alcohol-taste beverages having tastes like alcoholic beverages. Examples of the alcohol-taste beverage include, but not limited to, beer-taste beverages, chuhai-taste beverages, non-alcohol cocktails, sour-taste beverages, wine-taste beverages, and sake-taste beverages. When these beverages are described in more detail by giving chuhai-taste beverages, non-alcohol cocktails, and sour-taste beverages as examples, these beverages refer to beverages that are non-alcohol beverages and achieve flavors like chuhais (that mean alcoholic carbonated beverages in which distilled liquor is diluted with other beverages such as water, soft drinks, and teas with respect to the present invention), cocktails (that mean beverages each containing a spirit or a liqueur, acidulous fruit juice such as a citrus fruit, a sweet component, and optionally carbon dioxide with respect to the present invention), and sours (that mean beverages each containing a spirit, acidulous fruit juice such as a citrus fruit, a sweet component, and carbon dioxide with respect to the present invention) as the models.

Alcohol may be incorporated into the low-alcohol beverage of the present invention by any means. The low-alcohol beverage of the present invention typically contains alcohol raw material, and therefore contains alcohol. Examples of the alcohol raw material include, but not particularly limited to, for example spirits (rum, vodka, gin, tequila, or the like), liqueurs, whiskey, brandy, and shochu. Furthermore, the alcohol raw material may be brewage such as beer or wine. These alcohol raw materials can be used alone or in combination.

The type of the low-alcohol beverage of the present invention may be, but not particularly limited to, preferably a chuhai, a cocktail, and a sour.

The alcohol content of the beverage herein can be measured by any known method, for example, with a vibrating densimeter. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

### (Carbon dioxide)

The beverage of the present invention may contain carbon dioxide. Carbon dioxide can be incorporated into the beverage by a method commonly known to those skilled in the art. Although the method is not limited to the following, for example, carbon dioxide may be dissolved in the beverage under pressure, carbon dioxide may be mixed with the beverage in the piping of a mixer such as a carbonator manufactured by GEA, the beverage may be sprayed in a tank filled with carbon dioxide to make the beverage absorb carbon dioxide, or the beverage may be mixed with carbonated water. These means are appropriately used to regulate the carbon dioxide pressure.

If the beverage of the present invention contains carbon dioxide, the carbon dioxide pressure thereof is, but not particularly limited to, preferably 0.7 to 4.5 kgf/cm² and more preferably 0.8 to 2.8 kgf/cm². In the present invention, the carbon dioxide pressure can be measured with the gas volume measuring apparatus GVA-500A, manufactured by Kyoto Electronics Manufacturing Co., Ltd. For example, the sample temperature is adjusted to 20°C, the air in the container in the gas volume measuring apparatus is removed (snift), followed by the shaking, and the carbon dioxide pressure is then measured. The carbon dioxide pressure as used herein means carbon dioxide pressure at 20°C unless otherwise specified.

### (Fruit juice or vegetable juice)

The beverage of the present invention may contain fruit juice and/or vegetable juice. The fruit juice may be in any form of straight juice, which is juice squeezed from fruits to be used as it is, or concentrated juice, which is obtained by concentrating the squeezed juice. Transparent fruit juice or cloudy fruit juice can also be used. Whole fruit juice, obtained by crushing whole fruits including the skins and removing only particularly coarse hard solid matter such as seed therefrom, fruit puree, obtained by straining fruits, or fruit juice into which the pulp of dried fruits is crushed or that is extracted from the pulp can also be used. The vegetable juice can also be used in the same form as the form of the above-mentioned fruit juice.

Examples of fruit juices include, but are not limited to, juices from citrus fruits (e.g., orange, *Citrus unshiu,* grapefruit, lemon, lime, *Citrus junos, Citrus iyo, Citrus natsudaidai, Citrus hassaku, Citrus reticulata* var *poonensis, Citrus depressa, Citrus sphaerocarpa*), pomes (*e.g.,* apple, Japanese pear), drupes (*e.g.,* peach, Japanese apricot, apricot, Japanese plum, cherry), berries (e.g., grape, blackcurrant, blueberry), tropical and subtropical fruits (*e.g.,* pineapple, guava, banana, mango, lychee), and fruity vegetables (e.g., strawberry, melon, watermelon). Any one of the aforementioned fruit juices may be used alone, or two or more of them may be used in combination. Examples of vegetable juices include, but are not limited to, tomato juice, corn juice, pumpkin juice, and carrot juice. Any one of the aforementioned vegetable juices may be used alone, or two or more of them may be used in combination. Also, a fruit juice and a vegetable juice may be used in combination.

The content of the fruit juice in the beverage of the present invention is not particularly limited, and is typically 0 to 100 w/w%, or less than 10 w/w% in terms of percent fruit juice content.

In the present invention, the " percent fruit juice content" in a beverage shall be calculated according to the conversion expression mentioned below using the amount (g) of a fruit juice added to 100 ml of a sample. Further, calculation of concentration factor shall be made as per the JAS guidelines, with the proviso that the sugar refractometer index for a sugar, honey, or the like added to a fruit juice is excluded. Percent fruit juice content (w/w%) = <Amount of fruit juice added (g)> × <concentration factor>/100 mL/<density of beverage> × 100

The content of the vegetable juice in the beverage of the present invention is not particularly limited, and is typically 0 to 100 w/w%, or less than 10 w/w%. The content of the vegetable juice is calculated in accordance with the content of the fruit juice in terms of the above-mentioned percent fruit juice content.

### (Other components)

As long as the effect of the present invention is not deteriorated, additives such as an acidulant, flavorings, vitamins, dyes, an antioxidant, a preservative, seasonings, extract, a pH adjustor, and a quality stabilizer to be commonly added to beverages can be added to the beverage in the present invention in addition.

### (Packaged beverage)

The beverage of the present invention can be provided in the form of a packaged beverage. The form of the container includes, but not limited to, metal containers such as cans, PET bottles, cartons, bottles, and pouches. For example, a sterilized packaged product can be produced by a method involving filling a container with the beverage of the present invention, followed by heat sterilization such as retort sterilization or a method involving sterilizing the beverage and filling a container with the sterilized beverage.

### (Method)

In another aspect, the present invention is a method for increasing the liquor-like taste of the low-alcohol beverage or the non-alcohol beverage. The method includes a step of adjusting the weight ratio of acesulfame potassium/sucralose in the beverage to 1 to 300 and a step of adding γ-aminobutyric acid to the beverage. The content of γ-aminobutyric acid in the beverage is preferably adjusted to 10 ppm or more. The method further preferably includes a step of adjusting the weight ratio of acesulfame potassium/sucralose in the beverage to 2 to 72 and a step of adjusting the content of γ-aminobutyric acid in the beverage to 50 to 5000 ppm.

The method for adjusting the contents of the components in the beverage is obvious from the above descriptions for the beverage. The timing thereof is not limited, either. For example, the above-mentioned steps may be performed at the same time, separately, or in random order. The finally obtained beverage only has to satisfy the above-mentioned conditions. The preferable content ranges of the above-mentioned components are as mentioned above with respect to the beverage. Furthermore, the specific examples and the amounts of the additional other components are also as mentioned above with respect to the beverage.

### (Numerical range)

In the description for clarification, the numerical ranges as used herein includes their end points, namely the lower limit values and the upper limit values.

### EXAMPLES

Although the present invention will be described based on Example hereinafter, the present invention is not limited to these Examples.

### (Test Example 1) Influence of sweeteners

A liquor-like taste imparting effect of sweeteners was examined.

Acesulfame potassium (having the sweetness 200 times that of sucrose) and sucralose (having the sweetness 600 times that of sucrose) were added to water at the weight ratios shown in the following table 1 so that the mixture had the same sweetness as an aqueous 6 % sucrose solution to prepare various samples which are aqueous solutions having an alcohol content (Alc.) of 0 v/v%.

Specifically, if the A/S ratio was 3, 15 mg of acesulfame potassium and 5 mg of sucralose were weighed and added to 50 ml of ion-exchange water, the mixture was well stirred, followed by the visual confirmation that undissolved matter did not remain, ion-exchange water was further added to adjust the total volume to 100 ml with a volumetric flask, and this was used as a beverage model solution. Acesulfame potassium sold as the trade name Sunett (R) (distributor: Nutrinova Japan) and sucralose sold as the trade name Sucralose (distributor: San-Ei Gen F.F.I., Inc.) were used. Other beverage model solutions were prepared in the same way so that the weight ratios were as shown in Table 1. As controls, a beverage model solution containing only acesulfame potassium and a beverage model solution containing only sucralose were also prepared in the same way. In Table 1, "A" represents acesulfame potassium, and "S" represents sucralose.

Four special panelists sensorily evaluated whether the effects of imparting a liquor-like taste (a preferable flavor that had sweet taste or thickness, and slight bitterness, and was typical of liquor) in the obtained various samples were felt on a scale of one to six with "felt very strongly" evaluated as 6 points and "not felt" evaluated as 1 point. The evaluation results of the four panelists were totaled. If the average thereof was 1 or more and less than 2, the sample was evaluated as "-". If the average thereof was 2 or more and less than 3, the sample was evaluated as "±". If the average thereof was 3 or more and less than 4, the sample beverage was evaluated as "+". If the average thereof was 4 or more and less than 5, the sample was evaluated as "++". If the average thereof was 5 or more, the sample was evaluated as "+++".

The panelists established the common understanding of the relationship between the scores and the tastes beforehand to reduce the difference in evaluation between the individuals, and then performed the evaluation tests. The table 1 shows the results of the test.

**[Table 1]**

| | | | | | | | | | | | | | | | | | |
|---|---|---|---|---|---|---|---|---|---|---|---|---|---|---|---|---|---|
| Alc.0 % | Sample No. | 1 | 2 | 3 | 4 | 5 | 6 | 7 | 8 | 9 | 10 | 11 | 12 | 13 | 14 | 15 | 16 |
| | A/S ratio | 0 (Only S) | 1 | 2 | 3 | 4 | 7 | 10 | 13 | 15 | 17 | 19 | 20 | 50 | 72 | 297 | 0 (Only A) |
| | Impartme nt of liquor-like taste | - | ± | + | ++ | ++ | +++ | +++ | +++ | +++ | +++ | +++ | +++ | ++ | + | ± | - |
| | Free comment | Sample is sweet and rich, and sweetne ss and stickines s are felt. | Sample is a little refreshin g. | Slight sharpnes s is felt in aftertast e. | Sharpness of aftertaste typical of liquor is increased, and impartme nt of liquor-like taste is perceived. | Sharpness of aftertaste typical of liquor is increased, and impartme nt of liquor-like taste is perceived. | Sharpness of aftertaste typical of liquor is further increased, aftertaste is moderatel y felt, and impartme nt of preferable liquor-like taste is perceived. | Sharpness of aftertaste typical of liquor is further increased, aftertaste is moderatel y felt, and impartme nt of preferable liquor-like taste is perceived. | Sharpness of aftertaste typical of liquor is further increased, aftertaste is moderatel y felt, and impartme nt of preferable liquor-like taste is perceived. | Sharpness of aftertaste typical of liquor is further increased, aftertaste is moderatel y felt, and impartme nt of preferable liquor-like taste is perceived. | Sharpness of aftertaste typical of liquor is further increased, aftertaste is moderatel y felt, and impartme nt of preferable liquor-like taste is perceived. | Sharpness of aftertaste typical of liquor is further d aftertaste is moderatel y felt, and impartme nt of preferable liquor-like taste is perceived. | Sharpness of aftertaste typical of liquor is further increased, aftertaste is moderatel y felt, and impartme nt of preferable liquor-like taste is perceived. | Sharpness of aftertaste typical of liquor is increased, and impartme nt of liquor-like taste is perceived Bitterness is slightly noticeable. | Sample is strongly bitter, and impartme nt of preferable liquor-like taste is not perceived. | Sample is strongly bitter, and impartme nt of preferable liquor-like taste is not perceived. | Sample is considerab ly strongly bitter, and impartmen t of preferable liquor-like taste is not perceived. |

If the ratio of acesulfame potassium/sucralose (weight ratio) was 1 or more, a liquor-like taste was imparted. If the ratio exceeded 300, the beverage model solution tasted considerably strongly bitter, and the impartment of a preferable liquor-like taste was not perceived. These results had a slightly different tendency from Example 1 of PTL 1, using samples having an alcohol content of 2 %, and it is conceivable that the difference results from a difference in the alcohol content.

### (Test Example 2) Influence of GABA

GABA was added to the beverage model solution Sample No. 6, prepared in Test Example 1 and containing acesulfame potassium/sucralose (weight ratio) of 7, in various amounts to prepare samples as the beverage model solutions, and the effect of increasing a liquor-like taste with GABA was examined. The amount of GABA added is as shown in the following table.

The samples were subjected to sensory evaluation. Four special panelists sensorily evaluated whether the effects of increasing the liquor-like taste were felt in the samples on a scale of one to six with "felt very strongly" evaluated as 6 points and "not felt" evaluated as 1 point using the sample not containing GABA as a control (Ctrl). The evaluation results of the four panelists were totaled. If the average thereof was 1 or more and less than 2, the sample was evaluated as "-". If the average thereof was 2 or more and less than 3, the sample was evaluated as "±". If the average thereof was 3 or more and less than 4, the sample was evaluated as "+". If the average thereof was 4 or more and less than 5, the sample was evaluated as "++". If the average thereof was 5 or more, the sample was evaluated as "+++". In this case, the panelists also established the common understanding of the relationship between the scores and the tastes beforehand to reduce the difference in evaluation between the individuals, and then performed the evaluation tests.

The following table shows the results of the test. It was confirmed that GABA can increase the liquor-like taste.

**Table 2]**

| | 17 | 18 | 19 | 20 | 21 | 22 | 23 | 24 | 25 | 26 | 27 | 28 | 29 | 30 |
|---|---|---|---|---|---|---|---|---|---|---|---|---|---|---|
| GABA (ppm) | 10 | 40 | 50 | 60 | 70 | 100 | 150 | 200 | 250 | 300 | 500 | 1000 | 2000 | 5000 |
| Increase in liquor-like taste | ± | + | + | ++ | +++ | +++ | +++ | +++ | +++ | ++ | ++ | + | + | + |
| Free comment | As compared with Ctrl, containing no GABA, difference in thickness and the like are felt, but increase in liquor-like taste is scarcely felt. | As compared with Ctrl, containing no GABA, difference in thickness and the like are felt, but increase in liquor-like taste is scarcely felt. | As compared with Ctrl, containing no GABA, difference in thickness and the like are felt, but increase in liquor-like taste is scarcely felt. | Taste is tightened. | Aftertaste is refreshing, and sharp sharpness typical of liquor is felt. | Aftertaste is refreshing, and sharp sharpness typical of liquor is felt. | Aftertaste is refreshing, and sharp sharpness typical of liquor is felt. | Aftertaste is refreshing, and sharp sharpness typical of liquor is felt. | Aftertaste is refreshing, and sharp sharpness typical of liquor is felt. | Aftertaste is refreshing, and sharp sharpness typical of liquor is felt. | Aftertaste is refreshing, and sharp sharpness typical of liquor is felt. | Bitter acrid aftertaste is felt. | Bitter acrid aftertaste is felt. | Bitter acrid aftertaste is felt. |
| | | | | | | | | | | | | As compared with Ctrl, containing no GABA, increase in liquor-like taste is perceived, but is not increase in preferable liquor-like taste. | As compared with Ctrl, containing no GABA, increase in liquor-like taste is perceived, but is not increase in preferable liquor-like taste. | As compared with Ctrl, containing no GABA, increase in liquor-like taste is perceived, but is not increase in preferable liquor-like taste. |
| | | | | Aftertaste is sharpened, and sample is more typical of liquor. | | | | | | Increase in preferable liquor-like taste is felt. | Increase in preferable liquor-like taste is felt. | | | |
| | | | | | Increase in preferable liquor-like taste is felt. | Increase in preferable liquor-like taste is felt. | Increase in preferable liquor-like taste is felt. | Increase in preferable liquor-like taste is felt. | Increase in preferable liquor-like taste is felt. | Sample feels slightly rough to tongue, and has slightly bitter aftertaste. | Sample feels slightly rough to tongue, and has slightly bitter aftertaste. | | | |

### (Test Example 3) Influence of GABA and sweeteners

Various samples as beverage model solutions were prepared in accordance with the methods described in Test Examples 1 and 2. The ratio between the sweeteners and the amount of GABA added are as shown in the following table.

The samples were subjected to the sensory evaluation in the same way as in Test Example 2 to confirm the effect of increasing a liquor-like taste. It is samples having sweetener ratios (A/S ratios) of 3 or 50 and containing no GABA that are used as controls. The results of the test are shown in the following table. A high effect of increasing the liquor-like taste was perceived in a particular range.

**[Table 3]**

| Sample No. | 31 | 32 | 33 | 34 | 35 | 36 | 37 | 38 | 39 | 40 | 41 | 42 |
|---|---|---|---|---|---|---|---|---|---|---|---|---|
| GABA (ppm) | 0 | 60 | 70 | 200 | 500 | 5000 | 0 | 60 | 70 | 200 | 500 | 5000 |
| A/S ratio | 3 | 3 | 3 | 3 | 3 | 3 | 50 | 50 | 50 | 50 | 50 | 50 |
| Increase in liquor-like taste | | ++ | ++ | +++ | +++ | + | | ++ | ++ | +++ | +++ | + |
| Free comment | | Taste is tightened. | Taste is tightened. | Sharpness of aftertaste and slight bitterness are considerably typical of liquor, and increase in preferable liquor-like taste is perceived. | Sharpness of aftertaste and slight bitterness are considerably typical of liquor, and increase in preferable liquor-like taste is perceived. | As compared with Ctrl, containing no GABA, increase in liquor-like taste is perceived, but is not increase in preferable liquor-like taste. | | Taste is tightened. | Taste is tightened. | Sharpness of aftertaste and slight bitterness are considerably typical of liquor, and increase in preferable liquor-like taste is perceived. | Sharpness of aftertaste and slight bitterness are considerably typical of liquor, and increase in preferable liquor-like taste is perceived. | As compared with Ctrl, containing no GABA, increase in liquor-like taste is perceived, but is not increase in preferable liquor-like taste. |
| | | Aftertaste is sharpened, and sample is more typical of liquor. | Aftertaste is sharpened, and sample is more typical of liquor. | | | | | Aftertaste is sharpened, and sample is more typical of liquor. | Aftertaste is sharpened, and sample is more typical of liquor. | | | |

## Claims

1. A beverage having an alcohol content of less than 3 v/v%, comprising acesulfame potassium, sucralose, and γ-aminobutyric acid, wherein a weight ratio of acesulfame potassium/sucralose is 1 to 300.

2. The beverage according to claim 1, wherein a content of γ-aminobutyric acid is 10 ppm or more.

3. The beverage according to claim 1 or 2, wherein the weight ratio of acesulfame potassium/sucralose is 2 to 72, and the content of γ-aminobutyric acid is 50 to 5000 ppm.

4. The beverage according to any one of claims 1 to 3, wherein the beverage has an alcohol content of 0.00 v/v%.

5. A method for increasing a liquor-like taste of a beverage having an alcohol content of less than 3 v/v%, comprising:
a step of adjusting a weight ratio of acesulfame potassium/sucralose in the beverage to 1 to 300 and
a step of adding γ-aminobutyric acid to the beverage.

6. The method according to claim 5, wherein a content of γ-aminobutyric acid in the beverage is adjusted to 10 ppm or more.
